# EUROPÄISCHE PATENTSCHRIFT

(11) **EP 2 071 363 B1**
(45) Veröffentlichungstag und Bekanntmachung des Hinweises auf die Patenterteilung: **21.07.2021**
(21) Anmeldenummer: 08017078.0
(22) Anmeldetag: 27.09.2008
(51) Int. Cl.: G01V 8/20

(54) **Lichtgitter und Verfahren zu dessen Betrieb**
Lighting grid and method for its operation
Barrière lumineuse et son procédé de fonctionnement

(30) Priorität: 11.12.2007 DE 102007059565
(43) Veröffentlichungstag der Anmeldung: 17.06.2009
(73) Patentinhaber: Leuze electronic GmbH + Co. KG, 73277 Owen/Teck (DE)
(72) Erfinder: Haberer, Hermann, 81379 München (DE); Lohmann, Lutz, Dr., 82140 Olching (DE)
(74) Vertreter: Ruckh, Rainer Gerhard

(56) Entgegenhaltungen:
- EP-A1- 1 772 753
- EP-A2- 1 118 881
- DE-A1- 3 803 033
- DE-A1- 10 033 077
- DE-A1- 19 925 553
- US-A- 4 063 085

## Beschreibung

Die Erfindung betrifft ein Lichtgitter sowie ein Verfahren zum Betrieb eines Lichtgitters.

Ein derartiges Lichtgitter ist aus der DE 39 39 191 A1 bekannt. Das Lichtgitter weist zur Überwachung eines flächigen Überwachungsbereichs eine Sendereinheit und eine Empfängereinheit auf, die an gegenüberliegenden Rändern des Überwachungsbereichs angeordnet sind. Die Sendereinheit weist eine Anordnung von nebeneinander liegend angeordneten, Sendelichtstrahlen emittierenden Sendern auf. Entsprechend weist die Empfängereinheit eine Anordnung von nebeneinander liegend angeordneten Empfängern auf. Jedem Sender ist dabei ein Empfänger zur Ausbildung einer Strahlachse zugeordnet. Bei freiem Strahlengang werden die Empfänger mit den von vom jeweils zugeordneten Sender emittierten Sendelichtstrahlen beaufschlagt. Befindet sich ein Objekt im Strahlengang, so wird der Strahlengang der Sendelichtstrahlen wenigstens eines Senders unterbrochen, so dass diese nicht mehr auf den zugeordneten Empfänger oder die zugeordneten Empfänger auftreffen, wodurch ein Objektfeststellungssignal generiert wird.

Bei dem Betrieb des Lichtgitters werden die Sender und Empfänger der einzelnen Strahlachsen zyklisch nacheinander aktiviert. Die Synchronisierung der Sender und der Empfänger erfolgt auf optischem Weg. Hierzu sendet der Sender der ersten Strahlachse Sendelichtstrahlen mit einer spezifischen Kennung aus. Die übrigen Sender senden Sendelichtstrahlen mit jeweils einer identischen Kennung aus, die sich von der Kennung des ersten Senders unterscheidet. Die Kennung des ersten Senders besteht darin, dass dieser vier Sendelichtimpulse aussendet, während die restlichen Sender zwei Sendelichtpulse emittieren.

Somit kann die sich von der Kennung der übrigen Sender unterscheidende Kennung des ersten Senders zur optischen Synchronisierung der Sender und der Empfänger genutzt werden.

Die DE 10 2005 056 000 A1 beschreibt ein Lichtgitter mit einer Sendereinheit mit mehreren Sendeelementen und einer Empfängereinheit mit mehreren Empfangselementen, die mehrere zusammenarbeitende Paare bilden, die j e aus einem Sendeelement und einem Empfangselement bestehen. Mittels einer Sendersteuerung sowie einer Empfängerauswerteeinheit sind die Paare zeitlich nacheinander zyklisch aktivierbar zum Aussenden und hierzu synchronen Empfangen von Sendeimpulsen. Die Sendersteuerung und die Empfängerauswerteeinheit sind elektrisch voneinander entkoppelt. Die Sendersteuerung ist für jeden Zyklus zum Aussenden genau eines Sendeimpulses je Sendeelement ausgebildet. Zudem gibt die Sendersteuerung eine erste Synchronisationspause nach einem ersten Sendeimpuls für ein Sendelement im Zyklus aus. Im selben Zyklus gibt die Sendersteuerung eine zweite Synchronisationspause nach einem zweiten Sendeimpuls mit einer zur ersten Synchronisationspause verschiedenen Dauer. Die Empfängerauswerteeinheit ist in Abhängigkeit der ersten und zweiten Synchronisationspause im Zyklus auf diese erste und/oder zweite Synchronisationspause synchronisierbar. Alle Sendeimpulse weisen gleiche Dauer und Form auf.

Nachteilig bei diesem Lichtgitter ist, dass bedingt durch die Auswertung von Synchronisationspausen zwischen dem Aussenden von Sendeimpulsen durch zwei Sendelemente immer mehrere von Strahlachsen, die jeweils aus einem Paar eines Sende- und Empfangselements bestehen, zur Synchronisierung herangezogen werden müssen. Wenn nur eine dieser zur Synchronisierung benötigten Strahlachsen durch einen Objekteingriff dauerhaft blockiert ist, ist eine Synchronisierung des Lichtgitters nicht mehr möglich.

Die EP 1 772 753 A1 betrifft ein Verfahren zum Betrieb eines Lichtgitters mit einer vorgegebenen Anzahl von Strahlachsen bildenden Paaren von Sendelichtstrahlen emittierenden Sendern und Empfängern. Diese werden zur Detektion von Objekten in einem Überwachungsbereich zyklisch nacheinander aktiviert. Den Sendelichtstrahlen der einzelnen Strahlachsen wird jeweils wenigstens eine Kennung aufgeprägt. Zur Optischen Synchronisierung der Sender und Empfänger wird wenigstens eine beliebige Strahlachse innerhalb eines Zyklus herangezogen, für welche die Kennung der Sendelichtstrahlen im zugeordneten Empfänger registriert wird. Anhand dieser Kennung erfolgt eine eindeutige Zuordnung dieser Strahlachsen innerhalb der Gesamtheit der Strahlachsen.

Die DE 199 25 553 A1 betrifft eine optoelektronische Vorrichtung zum Erfassen von Objekten in einem Überwachungsbereich mit wenigstens zwei jeweils Folgen von Lichtimpulsen emittierenden Sendern und wenigstens einem Lichtimpulse empfangenden Empfänger. Die von den Sendern emittierten Lichtimpulse werden an einem Umlenkelement umgelenkt und zum Empfänger geführt, wobei die Lichtimpulse der verschiedenen Sender zeitversetzt auf den Empfänger auftreffen.

Die EP 1 118 881 A2 betrifft ein Verfahren zum Betreiben einer optoelektronischen Sensoranordnung, insbesondere einer Lichtschranke oder eines Lichtgitters, zur Feststellung von in einem Überwachungsbereich vorhandenen Gegenständen. Bei dem Verfahren werden von einem Sender nacheinander jeweils einen zeitlichen Abstand aufweisende Lichtpulse durch den Überwachungsbereich zu einem die Lichtpulse empfangenden Empfänger ausgesandt und in Abhängigkeit vom Vorhandensein eines Gegenstandes im Überwachungsbereich wird durch eine an dem Empfängerangeschlossene Auswerteeinheit ein Gegenstands-Feststellungssignal abgegeben. Die Amplitude der Lichtpulse mit einem Wechsellichtsignal wird moduliert und die empfangenen Lichtpulse werden auf das Vorhandensein der Wechsellichtmodulation überprüft.

In DE 100 33 077 A1 ist ein Lichtgitter zur Erfassung von Objekten in einem Überwachungsbereich mit einer mehrere Lichtsender umfassenden Sendeeinheit und einer mehrere Lichtempfänger umfassenden Empfangseinheit beschrieben, bei dem in Abhängigkeit von einem zwischen Sende- und Empfangseinheit übertragenen Synchronisationssignal zeitlich nacheinander jeweils Paare von einander zugeordneten, den Überwachungsbereich begrenzenden Lichtsendern und Lichtempfängern aktivierbar sind, wobei wenigstens ein Lichtleiter zur Übertragung des Synchronisationssignals vorgesehen ist.

Der Erfindung liegt die Aufgabe zugrunde, ein Lichtgitter mit verbesserter Funktionalität bereitzustellen.

Zur Lösung dieser Aufgabe sind die Merkmale der Ansprüche 1 und 7 vorgesehen. Vorteilhafte Ausführungsformen und zweckmäßige Weiterbildungen der Erfindung sind in den Unteransprüchen beschrieben.

Das erfindungsgemäße Verfahren dient zum Betrieb eines Lichtgitters mit einer eine Anzahl von Sendelichtstrahlen emittierenden Sendern aufweisenden Sendereinheit und mit einer von der Sendereinheit elektrisch entkoppelten, eine Anzahl von Empfängern aufweisenden Empfängereinheit, wobei jeweils ein Sender mit einem Empfänger eine Strahlachse bildet und die Sender und Empfänger der einzelnen Strahlachsen zur Erfassung von Objekten in einem Überwachungsbereich zyklisch einzeln nacheinander aktiviert werden. In der Sendereinheit ist eine Sender-Steuereinheit vorgesehen, mittels derer der Betrieb der Sender gesteuert ist. Ein aktivierter Sender emittiert Sendelichtstrahlen in Form von wenigstens einer Pulsgruppe, wobei eine Pulsgruppe aus einer folge von einzelnen Pulsen oder nur aus einem Puls besteht, wobei anhand einer Strahlachse die Synchronisierung aller Strahlachsen des Lichtgitters erfolgt. Die vom Sender dieser Strahlachse emittierten Pulse unterscheiden sich hinsichtlich wenigstens einer Kenngröße in Form der Dauern der Pulse oder in Form der Pausen zwischen den Pulsen der Pulsgruppen von den Pulsen der weiteren Strahlachsen. Mehrere Strahlachsen sind vorgesehen, deren Sender Pulsgruppen emittieren, die sich in wenigstens einer Kenngröße unterscheiden. Zur Synchronisierung des Lichtgitters wird wahlweise wenigstens eine dieser Strahlachsen herangezogen, wobei zur Synchronisierung des Lichtgitters die Sender der Strahlachsen nacheinander aktiviert werden und die Synchronisierung anhand der ersten freien Strahlachse, deren Sender eine Pulsgruppe mit einer eindeutigen Kennung emittiert, erfolgt, oder dass über die Sendereinheit die zur Synchronisierung verwendbaren Pulsgruppen nacheinander den Sendern verschiedener Strahlachsen aufgeprägt werden, so dass die zur Synchronisierung herangezogene Strahlachse zeitlich variiert, wobei die Variation nach Zeitmustern erfolgt, die durch die Sender-Steuereinheit beliebig vorgenommen werden können.

Gemäß einer ersten Variante der Erfindung emittieren alle Sender Pulsgruppen, die aus mehreren Pulsen bestehen. Insbesondere kann jeder Sender auch mehrere Pulsgruppen emittieren.

In diesem Fall kann wenigstens der Sender einer Strahlachse von allen anderen Sendern des Lichtgitters unterschieden werden, indem sich die Pausen oder Abstände zwischen den einzelnen Pulsen oder den einzelnen Pulsgruppen dieses Senders von den entsprechenden Parametern der restlichen Sender unterscheiden, so dass anhand dieser jeweiligen eindeutigen Kenngröße diese Strahlachse zur Synchronisierung des Lichtgitters herangezogen werden kann.

Gegenüber Lichtgittern, die Einzelpulse aussenden, ergibt sich in diesem Fall eine erhöhte Störsicherheit des Lichtgitters gegen Fremdlichteinstrahlung und insbesondere auch eine erhöhte Unempfindlichkeit gegenüber gegenseitigen Beeinflussungen zweier dicht nebeneinander angeordneter Lichtgitter, bei welchen die Gefahr besteht, dass Sendelichtstrahlen, die von den Sendern eines Lichtgitters emittiert werden, in einem Empfänger des zweiten Lichtgitters eingestrahlt werden. Durch die Verwendung mehrerer Pulse pro Pulsgruppe oder mehrerer Pulsgruppen, die von den Sendern der Lichtgitter emittiert werden, kann eine große Anzahl unterschiedlicher Folgen von Pulsen oder Pulsgruppen generiert werden, so dass in den Lichtgittern eindeutig identifizierbar ist, ob die Sendelichtstrahlen eines Senders korrekt vom zugeordneten Empfänger empfangen werden oder nicht.

Gemäß einer besonders einfachen, kostengünstigen Variante der Erfindung emittieren sämtliche Sender bei deren Aktivierung eine Pulsgruppe mit nur einem einzelnen Puls. Der Sender der zur Synchronisierung herangezogenen Strahlachse emittiert einen Puls, dessen Dauer sich von den Pulsen, die von den restlichen Sendern emittiert werden, unterscheiden. Damit ist die Strahlachse, dessen Sender Pulse mit der individuellen Pulsdauer emittiert, von allen anderen unterscheidbar und kann so zur Synchronisierung verwendet werden. Da die Sender aller Strahlachsen nur einzelne Pulse emittieren und zur Synchronisierung keine zusätzlichen Synchronisierpausen benötigt werden, kann die Ansteuerung der Sender mit einem geringen Hardwareaufwand durchgeführt werden. Zudem ergibt sich eine kurze Zykluszeit bei der zyklischen Aktivierung der einzelnen Strahlachsen.

Bei beiden Varianten des erfindungsgemäßen Lichtgitters besteht ein wesentlicher Aspekt darin, dass dieses, insbesondere bei Einsatz in sicherheitstechnischen Applikationen, eine hohe Verfügbarkeit aufweist, da bereits eine Strahlachse zur Synchronisierung des Lichtgitters ausreicht.

Bei sicherheitstechnischen Applikationen wird das Lichtgitter insbesondere zu Zwecken des Personenschutzes eingesetzt, wobei das Lichtgitter zur Überwachung von sicherheitskritischen Bereichen an Maschinen oder Anlagen eingesetzt wird.

Bei derartigen Anwendungen müssen sicherheitsrelevante Objekteingriffe, wie das Eintreten einer Person in den sicherheitskritischen Bereich, sicher erkannt werden, damit durch das im Lichtgitter generierte Objektfeststellungssignal ein Abschaltbefehl für die zu überwachende Maschine erzeugt wird, um Gefährdungen für die jeweilige Person ausschließen zu können.

Je nach Anwendungsfall kann der gesamte mit dem Lichtgitter erfasste Überwachungsbereich einen derartigen sicherheitskritischen Bereich bilden. Während des Betriebs der Maschine können jedoch auch dauernd oder zeitweise Teilbereiche des vom Lichtgitter erfassten Überwachungsbereichs nicht sicherheitskritische Bereiche bilden, da in diesen beispielsweise nichtsicherheitskritische Objekte wie Maschinenteile oder Fördereinheiten eindringen. Bei Eindringen derartiger nichtsicherheitskritischer Objekte ist ein Ansprechen des Lichtgitters und damit verbunden ein Auslösen eines Abschaltbefehls zu vermeiden, da dieser zu unnötigen Stillstandszeiten der Maschine führen würde.

In diesen Fällen können derartige nichtsicherheitsrelevante Bereiche des vom Lichtgitter erfassten Überwachungsbereichs mittels eines sogenannten Blanking- oder Mutingverfahrens ausgeblendet werden. Bei den Strahlachsen des Lichtgitters, welche die ausgeblendeten Bereiche bilden, führt eine Unterbrechung der Sendelichtstrahlen durch einen Objekteingriff nicht zu einem Abschaltbefehl für die Maschine. Nur wenn ein Objekt in einen nicht ausgeblendeten Bereich des Lichtgitters eintritt, führt die Unterbrechung einer Strahlachse in diesem Bereich zu einem Abschaltbefehl für die Maschine. Durch derartige Blanking- und Mutingverfahren kann die Verfügbarkeit der mit dem Lichtgitter überwachten Maschine erheblich erhöht werden.

Jedoch sind derartige ausgeblendete Bereiche für den Betrieb des Lichtgitters selbst problematisch. In einem derartigen ausgeblendeten Bereich des Lichtgitters können eine oder mehrere Strahlachsen durch einen Objekteingriff dauerhaft unterbrochen sein. Wenn nun gerade diese Strahlachsen zur Synchronisierung benötigt werden, ist ein Betrieb des Lichtgitters nicht mehr möglich, da diese Strahlachsen nicht mehr zur Synchronisierung genutzt werden können.

Werden zur Synchronisierung des Lichtgitters zwingend mehrere Strahlachsen benötigt, so ist die Wahrscheinlichkeit, dass eine dieser Strahlachsen in einen ausgeblendeten Bereich fällt und damit dauerhaft unterbrochen ist, relativ groß. Bei dem erfindungsgemäßen Lichtgitter reicht jedoch bereits eine Strahlachse zur Synchronisierung aus, so dass die Wahrscheinlichkeit, dass diese Strahlachse in einen ausgeblendeten Bereich fällt, entsprechend geringer ist. Damit ist die Gefahr, dass das Lichtgitter nicht synchronisierbar ist, entsprechend reduziert, das heißt die Verfügbarkeit des Lichtgitters ist erhöht.

Die Verfügbarkeit des erfindungsgemäßen Lichtgitters kann signifikant dadurch erhöht werden, wenn mehrere Strahlachsen vorgesehen sind, deren Sender Pulsgruppen emittieren, die sich in wenigstens einer Kenngröße unterscheiden und zur Synchronisierung des Lichtgitters wahlweise wenigstens eine dieser Strahlachsen herangezogen wird.

Dann werden zur Synchronisierung des Lichtgitters die Sender der Strahlachsen nacheinander aktiviert und die Synchronisierung erfolgt anhand der ersten freien Strahlachse, deren Sender eine Pulsgruppe mit einer eindeutigen Kennung emittiert.

Somit ist die Synchronisierung des Lichtgitters nicht mehr auf eine Strahlachse festgelegt, vielmehr wird zur Synchronisierung im Lichtgitter selbsttätig aus einer Anzahl von für die Synchronisierung geeigneten Strahlachsen die erste freie Strahlachse zur Synchronisierung herangezogen. Dies führt zu einer signifikanten Erhöhung der Verfügbarkeit, da infolge der Variation der zur Synchronisierung herangezogenen Strahlachsen nun beliebige Teilbereiche des Lichtgitters ausgeblendet sein können.

Derselbe vorteilhafte Effekt wird mit einer alternativen Ausgestaltung des Lichtgitters dahingehend erzielt, dass mit der in der Sendereinheit integrierten Sender-Steuereinheit die zur Synchronisierung verwendbaren Pulse, das heißt Pulsfolgen wenigstens einer Pulsgruppe, nacheinander den Sendern verschiedener Strahlachsen aufgeprägt werden, so dass diese Sender Sendelichtstrahlen in Form dieser Pulse emittieren. Damit wird erreicht, dass die zur Synchronisierung herangezogene Strahlachse zeitlich variiert, wobei die Variation nach Zeitmustern erfolgt, die durch die Sender-Steuereinheit beliebig vorgegeben werden können.

Für den Einsatz im Bereich der Sicherheitstechnik, insbesondere im Bereich des Personenschutzes, weist das erfindungsgemäße Lichtgitter einen fehlersicheren Aufbau zur Erfüllung der Anforderungen der jeweiligen Sicherheitsnormen auf. Insbesondere weist die in der Empfängereinheit integrierte Empfänger-Steuereinheit einen redundanten Aufbau auf, vorzugsweise in Form zweier sich gegenseitig zyklisch überwachender Rechnereinheiten. Mit dieser zweikanaligen Empfänger-Steuereinheit wird nicht nur eine fehlersichere Auswertung der Empfangssignale der Empfänger und dadurch eine fehlersichere Generierung von Objektfeststellungssignalen erhalten. Vielmehr erfolgt auch die Synchronisierung fehlersicher, wobei zur Synchronisierung in der Empfänger-Steuereinheit hierzu ein Synchronisationsalgorithmus implementiert ist.

Die Erfindung wird im Nachstehenden anhand der Zeichnungen erläutert. Es zeigen:
- Figur 1: Schematische Darstellung eines Lichtgitters zur Erfassung von Objekten in einem Überwachungsbereich.
- Figur 2: Darstellung des Lichtgitters gemäß Figur 1 bei einem in einer ersten Position liegenden Objekt zur Definition eines BlankingBereichs.
- Figur 3: Erstes Zeitdiagramm von Pulsgruppen, die von den Sendern des Lichtgitters gemäß Figur 1 emittiert werden.
- Figur 4: Erstes Zeitdiagramm von Pulsen einer Pulsgruppe, die von den Sendern des Lichtgitters gemäß Figur 1 emittiert werden.
- Figur 5: Zweites Zeitdiagramm von Pulsen einer Pulsgruppe, die von den Sendern des Lichtgitters gemäß Figur 1 emittiert werden.
- Figur 6: Drittes Zeitdiagramm von Pulsen einer Pulsgruppe, die von den Sendern des Lichtgitters gemäß Figur 1 emittiert werden.
- Figur 7: Zeitdiagramm der von den Sendern zweier Lichtgitter emittierten Pulsen einer Pulsgruppe.
- Figur 8: Zeitdiagramm von Einzelpulsen, die von den Sendern des Lichtgitters gemäß Figur 1 emittiert werden.

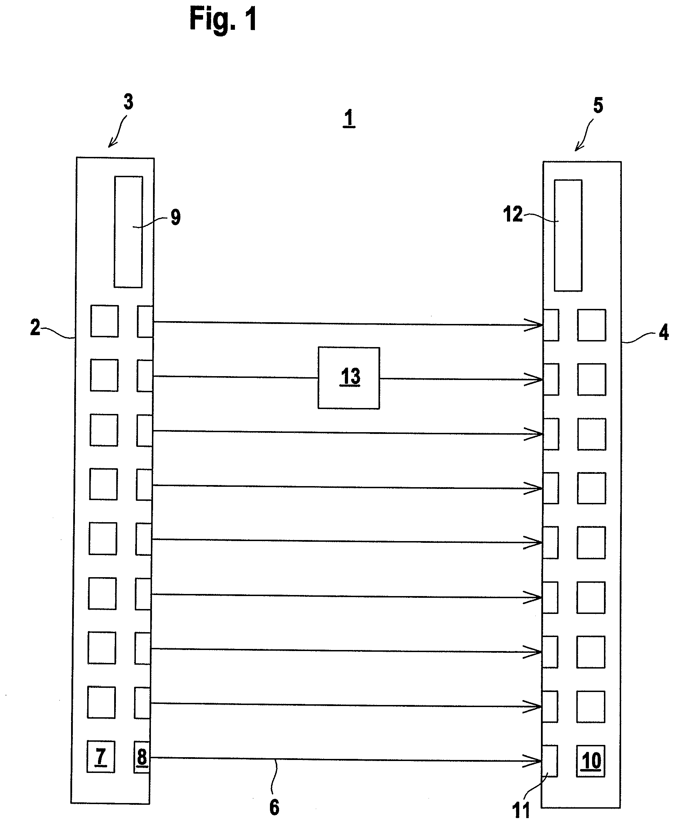

Figur 1 zeigt den Aufbau eines Lichtgitters 1 zur Überwachung eines Überwachungsbereichs. Das Lichtgitter 1 weist eine in einem ersten Gehäuse 2 integrierte Sendereinheit 3 und eine in einem zweiten Gehäuse 4 integrierte Empfängereinheit 5 auf.

Die Sendereinheit 3 weist eine Anordnung von Sendelichtstrahlen 6 emittierenden Sendern 7 auf. Die Sender 7 bestehen vorzugsweise aus identisch ausgebildeten Leuchtdioden und sind in Abstand nebeneinander liegend angeordnet, wobei die Sender 7 vorzugsweise äquidistant angeordnet sind. Zur Strahlformung der Sendelichtstrahlen 6 ist jedem Sender 7 eine Sendeoptik 8 vorgeordnet. Die Sendeoptiken 8 sind im Bereich der Frontwand des Gehäuses 2 hinter einem nicht separat dargestellten Austrittsfenster angeordnet.

Die optischen Achsen der im Überwachungsbereich geführten Sendelichtstrahlen 6 verlaufen parallel zueinander in der Ebene des Überwachungsbereichs.

Die Sender 7 werden von einer Sender-Steuereinheit 9 angesteuert. Im vorliegenden Ausführungsbeispiel werden die Sender 7 im Pulsbetrieb betrieben. Die einzelnen Sender 7 emittieren zyklisch nacheinander Sendelichtstrahlen 6 in Form einzelner Pulse oder Folgen von Pulsen, wobei die Taktung über die Sender-Steuereinheit 9 erfolgt. Dabei werden innerhalb eines Zyklus die Sender 7 entsprechend ihrer Reihenfolge in der Sendereinheit 3 in einer vorgegebenen Scanrichtung nacheinander aktiviert.

Die Empfängereinheit 5 weist eine Anordnung von identisch ausgebildeten, nebeneinander liegend angeordneten Empfängern 10 auf. Die Empfänger 10 bestehen vorzugsweise jeweils aus einer Fotodiode und sind äquidistant angeordnet. Jedem Empfänger 10 ist eine Empfangsoptik 11 vorgeordnet. Dabei liegt jeweils ein Empfänger 10 einem Sender 7 der Sendereinheit 3 gegenüber. Die Strahlformung der Sendelichtstrahlen 6 ist im vorliegenden Fall derart gewählt, dass bei freiem Strahlengang die Sendelichtstrahlen 6 eines Senders 7 jeweils nur auf den gegenüberliegend angeordneten Empfänger 10 treffen. Jeder Sender 7 und der diesem zugeordnete Empfänger 10 bildet eine Strahlachse des Lichtgitters 1. Die Gesamtheit der Strahlachsen des Lichtgitters 1 definiert den mit diesem erfassten Überwachungsbereich.

Die Empfänger 10 werden über eine Empfänger-Steuereinheit 12 gesteuert. Weiter werden die am Ausgang der Empfänger 10 anstehenden Empfangssignale in der Empfänger-Steuereinheit 12 ausgewertet. Bei freiem Strahlengang des Lichtgitters 1 treffen die Sendelichtstrahlen 6 ungehindert auf die zugeordneten Empfänger 10 und generieren dort einem freien Strahlengang entsprechende Referenz-Empfangssignale. Insbesondere erfolgt die Bewertung der Empfangssignale in der Empfänger-Steuereinheit 12 mit einem Schwellwert, wobei die Amplituden der Referenz-Empfangssignale oberhalb des Schwellwerts liegen.

Dringt ein Objekt in den Überwachungsbereich ein, so wird der Strahlengang der Sendelichtstrahlen 6 wenigstens eines Senders 7 unterbrochen. Im vorliegenden Fall besteht das Objekt aus einem Körperteil 13 einer Person. Das Empfangssignal des zugeordneten Empfängers 10 liegt dann unterhalb des Schwellwerts, das heißt an diesem Empfänger 10 werden keine Referenz-Empfangssignale registriert.

Die Unterbrechungen der Strahlachsen werden in der Empfänger-Steuereinheit 12 zur Generierung eines Objektfeststellungssignals ausgewertet. Das Objektfeststellungssignal ist als binäres Schaltsignal ausgebildet, welches die Schaltabstände "0" und "1" aufweist. Der Schaltzustand "0" entspricht einem freien Strahlengang des Lichtgitters 1, das heißt in der Steuereinheit wurde kein Objekt registriert. Der Schaltzustand "1" entspricht einem Objekteingriff in den Strahlengang des Lichtgitters 1. Vorzugsweise reicht bereits die Unterbrechung einer Strahlachse aus, damit ein Objekteingriff gegeben ist. Durch die Generierung eines derartigen Objektfeststellungssignals wird ein Abschaltbefehl zum Abschalten einer Maschine oder Anlage generiert, deren Vorfeld mit dem Lichtgitter 1 überwacht wird.

Das Lichtgitter 1 bildet somit eine Personenschutzeinrichtung, die verhindert, dass sich Personen während des Betriebes der Maschine in deren Vorfeld aufhalten. Der Begriff Lichtgitter umfasst insbesondere auch Lichtvorhänge, bei welchen eine große Anzahl von Sendern und Empfängern vorgesehen ist.

Zur Erfüllung der Anforderungen der relevanten Sicherheitsnormen für den Einsatz im Personenschutz oder allgemein im Bereich der Sicherheitstechnik weist das Lichtgitter 1 einen fehlersicheren Aufbau auf. Vorzugsweise weist dabei die Empfänger-Steuereinheit 12 einen redundanten Aufbau auf, insbesondere in Form von zwei sich gegenseitig zyklisch überwachenden Rechnereinheiten. Zudem weist auch die Sender-Steuereinheit 9 einen fehlersicheren Aufbau auf, wodurch eine entsprechend sichere Ansteuerung der Sender 7 des Lichtgitters 1 gewährleistet ist.

In zahlreichen sicherheitstechnischen Applikationen können außer Personen als sicherheitskritische Objekte auch Objekte in den Strahlengang des Lichtgitters 1 eintreten, die nicht zur Auslösung eines Objektfeststellungssignals führen sollen. Beispielsweise können derartige Objekte von Maschinenteilen oder von beweglichen Objekten, insbesondere von an der Maschine zu bearbeitenden Werkstücken, gebildet sein, die nicht zu einer Gefährdung von Personen führen. Bei Eintritt derartiger Objekte wäre ein Stillsetzen der Maschine über das Objektfeststellungssignal unnötig.

Um derartige unnötige Abschaltbefehle bei Eintritt von derartigen Objekten in den Strahlengang des Lichtgitters 1 zu verhindern, werden Blanking-Bereiche als Teilbereiche des Überwachungsbereiches definiert, innerhalb derer ein Objekteingriff nicht zur Generierung eines Objektfeststellungssignal und damit nicht zu einem Abschalten der Maschine führt.

Die Blanking-Bereiche sind dabei so zu wählen, dass diese exakt den Teilbereichen des Überwachungsbereichs, innerhalb derer diese Objekte liegen, entsprechen.

Zur Unterdrückung eines Objektfeststellungssignals durch derartige Objekte werden die im jeweiligen Blanking- Bereich liegenden Strahlachsen in der Auswerteeinheit ausgeblendet, so dass Strahlunterbrechungen dieser Strahlachsen nicht zur Generierung eines Objektfeststellungssignals führen. Desweiteren wird oftmals sogar das Vorhandensein derartiger Objekte im Überwachungsbereich gefordert. Wäre zum Beispiel ein Werkstück im Bereich der Maschine nicht vorhanden, so läge eine Fehlfunktion vor. Daher wird in diesen Fällen vorteilhaft ein Objektfeststellungssignal gerade dann generiert, wenn das betroffene Objekt nicht den Blanking-Bereich vollständig abdeckt.

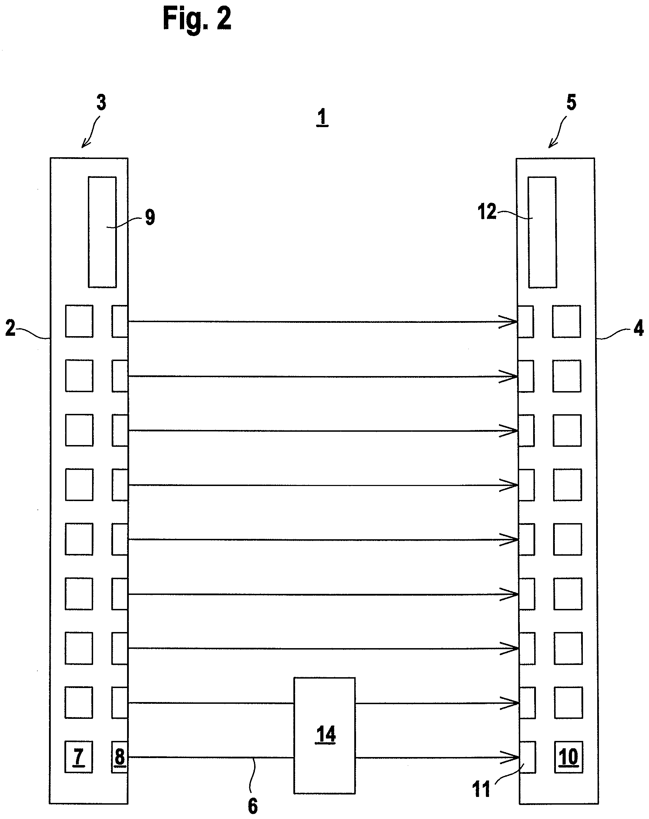

Figur 2 zeigt das Lichtgitter 1 mit einem im Überwachungsbereich liegenden stationären Pfeiler 14 als nicht sicherheitskritischem Objekt, welches einen Blanking-Bereich definiert, der im vorliegenden Fall die ersten drei Strahlachsen des Lichtgitters 1 umfasst.

Unabhängig davon, ob das Lichtgitter 1 mit ausgeblendeten Bereichen oder ohne ausgeblendete Bereiche betrieben wird, muss die Aktivierung der Sender 7 synchron zur Aktivierung der Empfänger 10 erfolgen, damit jeweils die Sender 7 und Empfänger 10 einer Strahlachse gleichzeitig aktiviert sind.

Zur Durchführung der Synchronisierung ist in der Empfänger-Steuereinheit 12 ein Synchronisationsalgorithmus implementiert. Der Synchronisationsalgorithmus ist von Software Modulen gebildet, mittels derer das Lichtgitter 1 programmiert wird. Durch die Implementierung des Synchronisationsalgorithmus in der redundant aufgebauten Empfänger-Steuereinheit 12 ist eine fehlersichere Synchronisierung des Lichtgitters 1 gewährleistet.

Zur Synchronisierung des Lichtgitters 1 wird allgemein eine Strahlachse herangezogen, die anhand der vom Sender 7 dieser Strahlachse emittierten pulsförmigen Sendelichtstrahlen 6 von den anderen Strahlachsen eindeutig unterschieden werden kann. Werden am zugeordneten Empfänger 10 dieser zur Synchronisierung verwendeten Strahlachse die pulsförmigen Sendelichtstrahlen 6 des zugeordneten Senders 7 erkannt, so werden ausgehend von dieser Strahlachse die Sender 7 und Empfänger 10 der weiteren Strahlachsen einzeln nacheinander zum Betrieb des Lichtgitters 1 aktiviert. Die Auswertung, ob an einem Empfänger 10 die Sendelichtstrahlen 6 des zugeordneten Senders 7 empfangen werden, erfolgt in der Empfänger-Steuereinheit 12 derart, dass dort entsprechende Sollwerte abgespeichert sind, die mit den aktuell am jeweiligen Empfänger 10 registrierten Empfangssignalen verglichen werden.

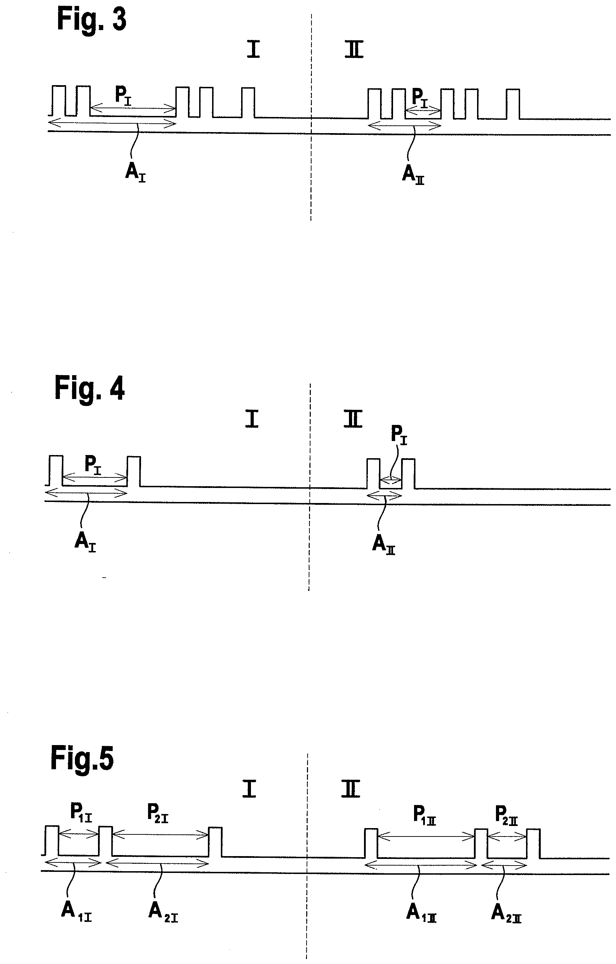

Figur 3 zeigt eine erste Ausführungsform der von den Sendern 7 des Lichtgitters 1 gemäß Figur 1 emittierten pulsförmigen Sendelichtstrahlen 6. In Figur 3, wie auch in den nachfolgenden Figuren 4 bis 8, sind jeweils mit I die von dem zur Synchronisierung herangezogenen Sender 7 emittierten pulsförmigen Sendelichtstrahlen 6 dargestellt. Mit II sind die von den Sendern 7 aller weiteren Strahlachsen emittierten pulsförmigen Sendelichtstrahlen dargestellt. Dies bedeutet, dass alle Sender 7, mit Ausnahme des zur Synchronisierung herangezogenen Senders 7, in identischer Weise pulsförmige Sendelichtstrahlen 7 emittieren.

Bei dem Ausführungsbeispiel gemäß Figur 3 emittiert der zur Synchronisierung herangezogene Sender 7 Sendelichtstrahlen 6 in Form von zwei Pulsgruppen, wobei die erste Pulsgruppe zwei einzelne Pulse und die zweite Pulsgruppe drei einzelne Pulse umfasst. Alle Pulse weisen dieselbe Pulsbreite, das heißt dieselbe Dauer auf. Die Pulse der ersten Pulsgruppe sind durch eine Pause P_{I} beziehungsweise durch einen Abstand A_{I} getrennt. Dabei bedeutet der Begriff der Pause generell die zeitliche Differenz zwischen dem letzten Puls der ersten Pulsgruppe und dem ersten Puls der folgenden Pulsgruppe. Der Begriff Abstand bedeutet generell die zeitliche Differenz zwischen dem jeweils ersten Puls der ersten und der folgenden Pulsgruppe.

Pulsgruppen im Sinne der sämtlichen Ausführungsbeispiele sind Folgen von Einzel-Pulsen, wobei deren zeitliche Abstände erheblich kleiner sind als der zeitliche Abstand zur jeweils nächsten Pulsgruppe.

Die weiteren Sender 7 emittieren wie der zur Synchronisierung herangezogene Sender 7 jeweils zwei Pulsgruppen, wobei die erste Pulsgruppe wieder zwei einzelne Pulse und die zweite Pulsgruppe wieder drei einzelne Pulse umfasst. Die Pulsbreite der Pulse und die zeitlichen Abstände zwischen den einzelnen Pulsen einer Pulsgruppe sind identisch mit den entsprechenden Größen für den zur Synchronisierung herangezogenen Sender 7.

Der einzige Unterschied besteht in den Abständen A_{II} beziehungsweise in den Pausen P_{II} zwischen den Pulsgruppen, in welchen sich die pulsförmigen Sendelichtstrahlen 6 dieser Sender 7 von dem Abstand A_{I} beziehungsweise der Pause P_{I} der pulsförmigen Sendelichtstrahlen 6 des zur Synchronisierung herangezogenen Senders 7 unterscheiden.

Durch die Auswertung der Abstände A_{I}, A_{II} beziehungsweise der Pausen P_{I}, P_{II} kann in der Empfänger-Steuereinheit 12 die zur Synchronisierung herangezogene Strahlachse eindeutig erkannt werden.

Die unterschiedlichen Kodierungen der pulsförmigen Sendelichtstrahlen 6 können über die Sender-Steuereinheit 9 einfach realisiert werden, da sämtliche Sender 7 Pulse mit identischen Pulsbreiten emittieren, wobei zur Unterscheidung der Sendelichtstrahlen 6 unterschiedlicher Sender 7 nur der Abstand oder die Pause zwischen den Pulsgruppen unterschiedlich gewählt werden muss. Weiterhin ist vorteilhaft, dass die von den Pulsen gebildeten Pulsgruppen individuell kodierte Sendelichtstrahlen 6 bilden, die in der Empfänger-Steuereinheit 12 leicht von einfallendem Störlicht unterschieden werden können.

Figur 4 zeigt eine weitere Ausführungsform der von den Sendern 7 des Lichtgitters 1 emittierten pulsförmigen Sendelichtstrahlen 6. In diesem Fall emittieren sämtliche Sender 7 jeweils eine Pulsgruppe, bestehend aus zwei einzelnen Pulsen, wobei sämtliche Pulse dieselbe Pulsbreite aufweisen.

In diesem Fall unterscheiden sich die pulsförmigen Sendelichtstrahlen 6 des zur Synchronisierung herangezogenen Senders 7 in dem Abstand A_{I} oder in der Pause P_{I} zwischen den Pulsen von dem Abstand A_{II} oder der Pause P_{II} der pulsförmigen Sendelichtstrahlen 6 der Sender 7 aller anderen Strahlachsen. Da jeder Sender 7 nur zwei einzelne Pulse emittiert, wird eine kurze Zykluszeit des Lichtgitters 1 erhalten. Zudem können die aus zwei Pulsen bestehenden Pulsgruppen einfach in der Sender-Steuereinheit 9 generiert werden.

Figur 5 zeigt eine Erweiterung der Ausführungsform gemäß Figur 4. In diesem Fall emittieren sämtliche Sender 7 des Lichtgitters 1 eine Pulsgruppe bestehend aus drei Pulsen, wobei die Pulsbreiten aller Pulse wieder identisch sind. Bei der Pulsgruppe, die zur Synchronisierung des Lichtgitters 1 verwendet wird, unterscheiden sich die Abstände A_{1I}, A_{2I} oder Pausen P_{1I}, P_{2I} der Pulse der Pulsgruppen von den Abständen A_{1II}, A_{2II} beziehungsweise den Pausen P_{1II}, P_{2II} der Pulsgruppen der Sendelichtstrahlen 6 aller weiteren Sender 7. Die gesamte Sendedauer, das heißt der Abstand des jeweils ersten zum letzten Puls einer Pulsgruppe ist jedoch für alle Sender 7 gleich.

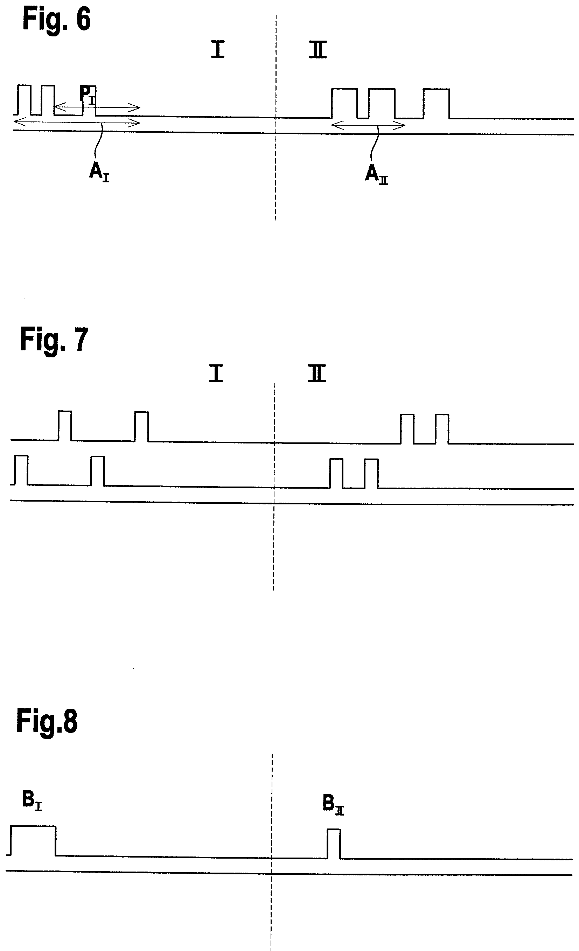

Figur 6 zeigt eine weitere Ausführungsform der von den Sendern 7 des Lichtgitters 1 gemäß Figur 1 emittierten pulsförmigen Sendelichtstrahlen 6. In diesem Fall emittieren alle Sender 7 jeweils eine Pulsgruppe bestehend aus drei einzelnen Pulsen. Dabei sind auch die Abstände oder Pausen zwischen den Pulsen der Pulsgruppen für alle Sender 7 identisch. In diesem Fall weisen die Pulse des zur Synchronisierung herangezogenen Senders 7 Pulsbreiten B_{1I}, B_{2I}, B_{3I} auf, die jeweils gleich groß sind, sich jedoch von den Pulsbreiten B_{1II}, B_{2II}, B_{3II} (für welche gilt B_{1II}=B_{2II}=B_{3II}) aller anderen Sender 7 eindeutig unterscheiden.

Mit den Ausführungsformen gemäß den Figuren 3 bis 6 wird nicht nur eine hohe Störfestigkeit gegen Fremdlichteinstrahlung erhalten. Weiterhin wird mit den von den Sendern 7 emittierten Pulsgruppen auch eine gegenseitige Beeinflussung zweier dicht benachbarter Lichtgitter 1 ausgeschlossen, die dann entstehen kann, wenn Sendelichtstrahlen 6 von Sendern 7 eines Lichtgitters 1 auf Empfänger 10 eines zweiten Lichtgitters 1 treffen.

Figur 7 verdeutlicht eine solche Situation von zwei Lichtgittern 1, deren Sender 7, entsprechend der Ausführungsform gemäß Figur 4, jeweils eine Pulsgruppe bestehend aus zwei einzelnen Pulsen emittieren. Das obere Zeitdiagramm zeigt die Pulse der Sender 7 des ersten Lichtgitters 1. Das untere Zeitdiagramm zeigt die Pulse der Sender 7 des zweiten Lichtgitters 1. Dadurch, dass in jedem Lichtgitter 1 für die an einem Empfänger 10 empfangenen Lichtpulse eine bestimmte Erwartungshaltung hinterlegt ist, kann erkannt werden, ob eine Fremdeinstrahlung von einem fremden Lichtgitter 1 vorliegt oder nicht.

Figur 8 zeigt eine weitere Ausführungsform des Sendebetriebs des Lichtgitters 1 gemäß Figur 1. In diesem Fall emittieren sämtliche Sender 7 nur einen Puls. Damit unterscheidet sich der Puls des zur Synchronisierung herangezogenen Senders 7 hinsichtlich seiner Pulsbreite B_{I} von den Pulsbreiten B_{II} der Sender 7 aller anderen Strahlachsen. Dadurch, dass die Sender 7 nur einzelne Pulse emittieren, wird eine kurze Zykluszeit des Lichtgitters 1 erhalten. Zudem können derartige Einzelpulse mit einen geringen Hardwareaufwand generiert werden.

Im einfachsten Fall wird immer dieselbe Strahlachse zur Synchronisierung des Lichtgitters 1 herangezogen, wobei sich die pulsförmigen Sendelichtstrahlen 6 dieser Strahlachse von den pulsförmigen Sendelichtstrahlen 6 aller anderen Strahlachsen unterscheiden. Beispielsweise kann dies bei den in den Figuren 1 und 2 dargestellten Lichtgittern 1 die oberste Strahlachse sein.

Probleme bei der Synchronisierung treten dann auf, wenn der ausgeblendete Bereich durch das beispielsweise vom Pfeiler 14 gebildete Objekt, nicht wie in Figur 2 dargstellt, die beiden untersten Sender 7 sondern die beiden obersten Strahlachsen umfasst. Dann ist die zur Synchronisierung benötigte oberste Strahlachse dauerhaft unterbrochen und die Synchronisierung des Lichtgitters 1 kann nicht durchgeführt werden.

Zur Lösung dieses Problems kann über die Sender-Steuereinheit 9 die Strahlachse zur Synchronisierung zeitabhängig vorgegeben werden. Dies kann dadurch erfolgen, dass die individuellen Pulse oder Pulsgruppen, anhand derer die Synchronisierung durchgeführt wird, nicht immer den Sendelichtstrahlen 6 desselben Senders 7 aufgeprägt werden. Vielmehr werden die Sender 7 von der Sender-Steuereinheit 9 so angesteuert, dass die in den Bereichen I der Figuren 3 bis 8 dargestellten, zur Synchronisierung verwendeten Pulse oder Pulsgruppen, in vorgegebenen Zeittakten von verschiedenen Sendern 7 emittiert werden. Dann wird bei beliebig ausgeblendeten Teilbereichen des Lichtgitters 1 zu einem Zeitpunkt ein Sender 7 einer nicht ausgeblendeten Strahlachse die zur Synchronisierung herangezogenen Pulse oder Pulsgruppen emittieren. Da die Strahlachse nicht ausgeblendet ist, empfängt der Empfänger 10 die Pulse oder die Pulsgruppen und die Synchronisierung des Lichtgitters 1 kann durchgeführt werden. Im nachfolgenden Betrieb können dann die einzelnen Sender 7 feste, gleichbleibende Pulse oder Pulsgruppen emittieren.

Eine alternative Lösung des genannten Problems der Synchronisierung des Lichtgitters 1 bei vorhandenen ausgeblendeten Bereichen besteht darin, dass nicht nur ein Sender 7, sondern mehrere Sender 7 individuelle Pulse oder Pulsgruppen emittieren, die von den Pulsen oder Pulsgruppen aller anderen Sender 7 unterschiedlich sind. Dann kann nicht nur eine, sondern es können mehrere Strahlachsen zur Synchronisierung des Lichtgitters 1 herangezogen werden. In diesem Fall erfolgt die Synchronisierung des Lichtgitters 1 derart, dass die Strahlachsen des Lichtgitters 1 nacheinander aktiviert werden und dann die erste freie Strahlachse, deren Sender 7 Pulse oder Pulsgruppen mit einer eindeutigen Kennung emittiert, welche dann vom zugeordneten Empfänger empfangen werden, zur Synchronisierung herangezogen wird.

Insbesondere in genannten Fällen, bei welchen die Sender 7 mehrerer Strahlachsen für die Synchronisierung verwendet werden können, kann als Synchronisierungsbedingung gefordert werden, dass nicht nur die eine eindeutige Kennung bildenden Pulse oder Pulsgruppen des Senders 7 einer Strahlachse vom zugeordneten Empfänger 10 empfangen werden müssen. Vielmehr kann die Synchronisierungsbedingung dahin erweitert sein, dass für wenigstens zwei Strahlachsen die vom Sender 7 emittierten Pulse oder Pulsgruppen vom zugeordneten Empfänger 10 empfangen werden. Diese Variante hat den Vorteil, dass nur Kennungspaare von den Kennungen der Pulse oder Pulsgruppen dieser zur Synchronisierung herangezogenen Sender 7 gebildet werden, wodurch der Kennungsvorrat, das heißt die Zahl der zur Verfügung stehenden unterschiedlichen Kennungen, erhöht werden kann.

### Bezugszeichenliste

- (1): Lichtgitter
- (2): Gehäuse
- (3): Sendereinheit
- (4): Gehäuse
- (5): Empfängereinheit
- (6): Sendelichtstrahlen
- (7): Sender
- (8): Sendeoptik
- (9): Sender-Steuereinheit
- (10): Empfänger
- (11): Empfangsoptik
- (12): Empfänger-Steuereinheit
- (13): Körperteil
- (14): Pfeiler

## Patentansprüche

1. Verfahren zum Betrieb eines Lichtgitters mit einer eine Anzahl von Sendelichtstrahlen emittierenden Sendern aufweisenden Sendereinheit und mit einer von der Sendereinheit elektrisch entkoppelten, eine Anzahl von Empfängern aufweisenden Empfängereinheit, wobei jeweils ein Sender mit einem Empfänger eine Strahlachse bildet und die Sender und Empfänger der einzelnen Strahlachsen zur Erfassung von Objekten in einem Überwachungsbereich zyklisch einzeln nacheinander aktiviert werden, wobei in der Sendereinheit (3) eine Sender-Steuereinheit (9) vorgesehen ist, mittels derer der Betrieb der Sender (7) gesteuert ist, wobei ein aktivierter Sender (7) Sendelichtstrahlen (6) in Form von wenigstens einer Pulsgruppe emittiert, wobei eine Pulsgruppe aus einer Folge von einzelnen Pulsen oder nur aus einem Puls besteht, wobei anhand einer Strahlachse die Synchronisierung aller Strahlachsen des Lichtgitters (1) erfolgt, wobei sich die vom Sender (7) dieser Strahlachse emittierten Pulse hinsichtlich wenigstens einer Kenngröße in Form der Dauern der Pulse oder in Form der Pausen zwischen den Pulsen der Pulsgruppen von den Pulsen der weiteren Strahlachsen unterscheiden; und wobei mehrere Strahlachsen vorgesehen sind, deren Sender (7) Pulsgruppen emittieren, die sich in wenigstens einer Kenngröße unterscheiden, und zur Synchronisierung des Lichtgitters (1) wahlweise wenigstens eine dieser Strahlachsen herangezogen wird, wobei zur Synchronisierung des Lichtgitters die Sender (7) der Strahlachsen nacheinander aktiviert werden und die Synchronisierung anhand der ersten freien Strahlachse, deren Sender (7) eine Pulsgruppe mit einer eindeutigen Kennung emittiert, erfolgt; oder wobei über die Sendereinheit (3) die zur Synchronisierung verwendbaren Pulsgruppen nacheinander den Sendern (7) verschiedener Strahlachsen aufgeprägt werden, so dass die zur Synchronisierung herangezogene Strahlachse zeitlich variiert, wobei die Variation nach Zeitmustern erfolgt, die durch die Sender-Steuereinheit (9) beliebig vorgegeben werden können.

2. Verfahren nach Anspruch 1, **dadurch gekennzeichnet, dass** bei einer aus einem einzelnen Puls bestehenden Pulsgruppe sich die Dauer dieses Pulses, der von dem zur Synchronisierung herangezogenen Sender (7) emittiert wird, von den Dauern der Pulse der Pulsgruppen, die von den restlichen Sendern (7) emittiert werden, unterscheidet.

3. Verfahren nach Anspruch 1, **dadurch gekennzeichnet, dass** jede Pulsgruppe aus mindestens zwei Pulsen besteht.

4. Verfahren nach Anspruch 3, **dadurch gekennzeichnet, dass** sich die Dauer wenigstens eines Pulses oder wenigstens eine Pause zwischen zwei Pulsen der Pulsgruppe, die von dem zur Synchronisierung herangezogenen Sender (7) emittiert wird, von den entsprechenden Parametern der Pulsgruppen, die von den restlichen Sendern (7) emittiert werden, unterscheidet.

5. Verfahren nach einem der Ansprüche 3 oder 4, **dadurch gekennzeichnet, dass** jeder aktivierte Sender (7) mehrere Pulsgruppen emittiert, wobei die Pausen zwischen zwei Pulsgruppen erheblich größer sind als die Pausen zwischen Pulsen einer Pulsgruppe, und wobei sich wenigstens eine Pause zwischen zwei Pulsgruppen des zur Synchronisierung herangezogenen Senders (7) von der entsprechenden Größe der übrigen Sender (7) unterscheidet.

6. Verfahren nach einem der Ansprüche 1 bis 5, **dadurch gekennzeichnet, dass** in der Empfängereinheit (5) Sollwerte für die vom Sender (7) der oder einer zur Synchronisierung verwendeten Strahlachse emittierten Pulsgruppen gespeichert sind, und dass die am Empfänger (10) dieser Strahlachse empfangenen Pulsgruppen mit den Sollwerten verglichen werden und bei vorhandener Übereinstimmung die Synchronisierung anhand dieser Strahlachse erfolgt.

7. Lichtgitter mit einer eine Anzahl von Sendelichtstrahlen emittierenden Sendern aufweisende Sendereinheit und mit einer von der Sendereinheit elektrisch entkoppelten, eine Anzahl von Empfängern aufweisenden Empfängereinheit, wobei jeweils ein Sender mit einem Empfänger eine Strahlachse bildet und die Sender und Empfänger der einzelnen Strahlachsen zur Erfassung von Objekten in einem Überwachungsbereich zyklisch einzeln nacheinander aktiviert sind, wobei in der Sendereinheit (3) eine Sender-Steuereinheit (9) vorgesehen ist, mittels derer der Betrieb der Sender (7) gesteuert ist, wobei ein aktivierter Sender (7) Sendelichtstrahlen (6) in Form von wenigstens einer Pulsgruppe emittiert, wobei eine Pulsgruppe aus einer Folge von einzelnen Pulsen oder nur aus einem Puls besteht, wobei anhand einer Strahlachse die Synchronisierung aller Strahlachsen der Lichtgitter (1) erfolgt, wobei sich die vom Sender (7) dieser Strahlachse emittierten Pulse hinsichtlich wenigstens einer Kenngröße in Form der Breiten der Pulse oder in Form der Pausen oder Abstände zwischen den Pulsen der Pulsgruppen von den Pulsen der weiteren Strahlachsen unterscheiden; und wobei mehrere Strahlachsen vorgesehen sind, deren Sender (7) Pulsgruppen emittieren, die sich in wenigstens einer Kenngröße unterscheiden, und zur Synchronisierung des Lichtgitters (1) wahlweise wenigstens eine dieser Strahlachsen herangezogen wird, wobei zur Synchronisierung des Lichtgitters die Sender (7) der Strahlachsen nacheinander aktiviert werden und die Synchronisierung anhand der ersten freien Strahlachse, deren Sender (7) eine Pulsgruppe mit einer eindeutigen Kennung emittiert, erfolgt; oder wobei über die Sendereinheit (3) die zur Synchronisierung verwendbaren Pulsgruppen nacheinander den Sendern (7) verschiedener Strahlachsen aufgeprägt werden, so dass die zur Synchronisierung herangezogene Strahlachse zeitlich variiert, wobei die Variation nach Zeitmustern erfolgt, die durch die Sender-Steuereinheit (9) beliebig vorgegeben werden können.

8. Lichtgitter nach Anspruch 7, **dadurch gekennzeichnet, dass** in der Empfängereinheit (5) eine Empfänger-Steuereinheit (12) integriert ist, in welcher eine fehlersichere Auswertung der Empfangssignale der Empfänger (10) durchführbar ist.

9. Lichtgitter nach Anspruch 8, **dadurch gekennzeichnet, dass** die Empfänger-Steuereinheit (12) einen redundanten Aufbau in Form zweier sich gegenseitig überwachende Rechnereinheiten aufweist.

10. Lichtgitter nach einem der Ansprüche 8 oder 9, **dadurch gekennzeichnet, dass** in der Empfänger-Steuereinheit (12) ein Synchronisationsalgorithmus implementiert ist.

11. Lichtgitter nach Anspruch 10, **dadurch gekennzeichnet, dass** mit dem Synchronisationsalgorithmus eine fehlersichere Synchronisierung durchführbar ist.

## Claims

1. A method for operating a light grid having a transmitter unit which has a number of transmitters emitting transmitted light beams, and having a receiver unit which is electrically decoupled from the transmitter unit and has a number of receivers, in each case one transmitter forming a beam axis with one receiver, and the transmitters and receivers of the individual beam axes being activated cyclically individually one after the other for the purpose of detecting objects in a monitoring region, a transmitter control unit (9) being provided in the transmitter unit (3) and being used to control the operation of the transmitters (7),
wherein an activated transmitter (7) emits transmitted light beams (6) in the form of at least one pulse group, wherein a pulse group consists of a sequence of individual pulses or of only one pulse, wherein the synchronisation of all beam axes of the light grid (1) is effected by means of a beam axis, wherein the pulses emitted by the transmitter (7) of this beam axis differ from the pulses of the further beam axes with respect to at least one characteristic variable in the form of the durations of the pulses or in the form of the pauses between the pulses of the pulse groups; and wherein a plurality of beam axes are provided, the transmitters (7) of which emit pulse groups which differ in at least one characteristic quantity, and at least one of these beam axes is selectively used for synchronising the light grid (1), wherein the transmitters (7) of the beam axes are successively activated for synchronising the light grid and the synchronisation takes place with the aid of the first free beam axis, the transmitter (7) of which emits a pulse group with a unique identifier; or
wherein the pulse groups which can be used for synchronisation are successively impressed on the transmitters (7) of different beam axes via the transmitter unit (3), so that the beam axis used for synchronisation varies in time, wherein the variation takes place according to time patterns which can be predetermined as desired by the transmitter control unit (9).

2. The method according to claim 1, **characterised in that**, in the case of a pulse duration of this pulse, which is emitted by the transmitter (7) used for synchronisation, differs from the durations of the pulses of the pulse groups which are emitted by the remaining transmitters (7).

3. The method according to claim 1, **characterised in that** each pulse group consists of at least two pulses.

4. The method according to claim 3, **characterised in that** the duration of at least one pulse or at least one of at least one pulse, or at least one pause between two pulses of the pulse group which is emitted by the sensor (7) used for synchronisation (7) used for synchronisation differs from the corresponding parameters of the pulse groups emitted by the remaining transmitters (7).

5. The method according to one of claims 3 or 4, **characterised in that** each activated transmitter (7) emits several groups of pulses, whereby the pauses between two pulse groups are substantially greater than the pauses between pulses of a pulse group, and wherein at least one pause between two between two pulse groups of the transmitter (7) used for the synchronisation (7) used for synchronisation differs from the corresponding size of the other different transmitters (7).

6. The method according to one of the claims 1 to 5, **characterised in that** setpoint values for the pulse groups emitted by the transmitter (7) of the beam axis or of a beam axis used for synchronisation are stored in the receiver unit (5), and **in that** the pulse groups received at the receiver (10) of this beam axis are compared with the setpoint values and, if there is agreement, synchronisation takes place on the basis of this beam axis.

7. A light grid with a transmitter unit having a number of transmitting light beams and with a receiver unit electrically decoupled from the transmitter unit and having a number of receivers, wherein in each case a transmitter forms a beam axis with a receiver and the transmitters and receivers of the individual beam axes are activated cyclically individually one after the other for the detection of objects in a monitoring region, wherein a transmitter control unit (9) is provided in the transmitter unit (3), by means of which the operation of the transmitters (7) is controlled,
wherein an activated transmitter (7) emits transmitted light beams (6) in the form of at least one pulse group, wherein a pulse group consists of a sequence of individual pulses or only of one pulse, wherein the synchronisation of all beam axes of the light grids (1) is effected by means of a beam axis, wherein the pulses emitted by the transmitter (7) of this beam axis differ from the pulses of the other beam axes with respect to at least one characteristic variable in the form of the widths of the pulses or in the form of the pauses or spacings between the pulses of the pulse groups; and
wherein a plurality of beam axes are provided, the transmitters (7) of which emit pulse groups which differ in at least one characteristic quantity, and at least one of these beam axes is selectively used for synchronising the light grid (1), wherein the transmitters (7) of the beam axes are successively activated for synchronising the light grid and the synchronisation takes place with the aid of the first free beam axis, the transmitter (7) of which emits a pulse group with a unique identification; or
wherein the pulse groups which can be used for synchronisation are successively impressed on the transmitters (7) of different beam axes via the transmitter unit (3), so that the beam axis used for synchronisation varies in time, wherein the variation takes place according to time patterns which can be predetermined as desired by the transmitter control unit (9).

8. The light grid according to claim 7, **characterised in that** a receiver unit (5) is provided in the receiver unit (5), a receiver control unit (12) is integrated, in which a fail-safe evaluation of the reception signals of the receivers (10) can be carried out.

9. The light grid according to claim 8, **characterised in that** the receiver control unit (12) has a redundant structure in the form of two mutually monitoring computer units.

10. The light grid according to one of the claims 8 or 9, **characterised in that** a synchronisation algorithm is implemented in the receiver control unit (12) is implemented.

11. The light grid according to claim 10, **characterised in that** a fail-safe synchronisation can be carried out with the synchronisation algorithm.

## Revendications

1. Procédé d'exploitation d'une barrière lumineuse comportant une unité d'émission qui présente un certain nombre d'émetteurs émettant des fais-ceaux lumineux d'émission, et une unité de réception découplée électriquement de l'unité d'émission et présentant un certain nombre de récepteurs, un émetteur formant à chaque fois un axe de faisceau avec un récepteur, et les émetteurs et les récepteurs des différents axes de faisceau étant activés cycliquement individuellement les uns après les autres pour détecter des objets dans une zone de surveillance, une unité de commande d'émetteur (9) étant prévue dans l'unité d'émission (3) et servant à commander le fonctionnement des émetteurs (7),
dans lequel un émetteur (7) activé émet des faisceaux lumineux (6) sous la forme d'au moins un groupe d'impulsions, dans lequel un groupe d'impulsions se compose d'une séquence d'impulsions individuelles ou d'une seule impulsion, dans lequel la synchronisation de tous les axes de faisceau de la barrière lumineuse (1) est effectuée au moyen d'un axe de faisceau, les impulsions émises par l'émetteur (7) de cet axe de rayonnement se distinguant des impulsions des autres axes de rayonnement par au moins une grandeur caractéristique sous la forme des durées des impulsions ou sous la forme des pauses entre les impulsions des groupes d'impulsions; et dans lequel plusieurs axes de rayonnement sont prévus, dont les émetteurs (7) émettent des groupes d'impulsions qui se distinguent par au moins une grandeur caractéristique, et au moins l'un de ces axes de rayonnement est utilisé de manière sélective pour la synchronisation du réseau lumineux (1), dans lequel les émetteurs (7) des axes de rayonnement sont activés successivement pour la synchronisation du réseau lumineux et la synchronisation a lieu à l'aide du premier axe de rayonnement libre, dont l'émetteur (7) émet un groupe d'impulsions avec un identificateur unique; ou
dans lequel les groupes d'impulsions utilisables pour la synchronisation sont appliqués successivement aux émetteurs (7) de différents axes de rayonnement par l'intermédiaire de l'unité d'émission (3), de sorte que l'axe de rayonnement utilisé pour la synchronisation varie dans le temps, la variation s'effectuant selon des modèles de temps qui peuvent être prédéterminés au choix par l'unité de commande d'émetteur (9).

2. Procédé selon la revendication 1, **caractérisé en ce que**, dans le cas d'une durée d'impulsion de cette impulsion, qui est émise par l'émetteur (7) utilisé pour la synchronisation, diffère des durées des impulsions des groupes d'impulsions qui sont émises par les autres émetteurs (7).

3. Procédé selon la revendication 1, **caractérisé en ce que** chaque groupe d'impulsions est constitué d'au moins deux impulsions.

4. Procédé selon la revendication 3, **caractérisé en ce que** la durée d'au moins une impulsion ou d'au moins une d'au moins une impulsion, ou d'au moins une pause entre deux impulsions du groupe d'impulsions qui est émis par le capteur (7) utilisé pour la synchronisation (7) utilisé pour la synchronisation diffère des paramètres correspondants des groupes d'impulsions émis par les émetteurs restants (7).

5. Procédé selon l'une des revendications 3 ou 4, **caractérisé en ce que** chaque émetteur (7) activé émet plusieurs groupes d'impulsions, les pauses entre deux groupes d'impulsions étant sensiblement supérieures aux pauses entre les impulsions d'un groupe d'impulsions, et dans lequel au moins une pause entre deux entre deux groupes d'impulsions de l'émetteur (7) utilisé pour la synchronisation (7) utilisé pour la synchronisation diffère de la taille correspondante des autres émetteurs (7) différents.

6. Procédé selon l'une des revendications 1 à 5, **caractérisé en ce que** des valeurs de consigne pour les groupes d'impulsions émis par l'émetteur (7) de l'axe du faisceau ou d'un axe du faisceau utilisé pour la synchronisation sont mémorisées dans l'unité de réception (5), et **en ce que** les groupes d'impulsions reçus au niveau du récepteur (10) de cet axe du faisceau sont comparés aux valeurs de consigne et, en cas de concordance, la synchronisation a lieu sur la base de cet axe du faisceau.

7. Barrière lumineuse avec une unité d'émission présentant un certain nombre de faisceaux lumineux d'émission et avec une unité de réception découplée électriquement de l'unité d'émission et présentant un certain nombre de récepteurs, un émetteur formant chaque fois un axe de faisceau avec un récepteur et les émetteurs et récepteurs des différents axes de faisceau étant activés cycliquement individuellement les uns après les autres pour la détection d'objets dans une zone de surveillance, une unité de commande d'émetteur (9) étant prévue dans l'unité d'émission (3), au moyen de laquelle le fonctionnement des émetteurs (7) est commandé,
dans lequel un émetteur (7) activé émet des faisceaux lumineux (6) sous la forme d'au moins un groupe d'impulsions, dans lequel un groupe d'impulsions se compose d'une séquence d'impulsions individuelles ou d'une seule impulsion, dans lequel la synchronisation de tous les axes de faisceau des grilles lumineuses (1) s'effectue au moyen d'un axe de faisceau, les impulsions émises par l'émetteur (7) de cet axe de rayonnement se distinguant des impulsions des autres axes de rayonnement par au moins une grandeur caractéristique sous la forme des largeurs des impulsions ou sous la forme des pauses ou des intervalles entre les impulsions des groupes d'impulsions; et
dans lequel plusieurs axes de rayonnement sont prévus, dont les émetteurs (7) émettent des groupes d'impulsions qui se distinguent par au moins une grandeur caractéristique, et au moins l'un de ces axes de rayonnement est utilisé de manière sélective pour la synchronisation du réseau lumineux (1), dans lequel les émetteurs (7) des axes de rayonnement sont activés successivement pour la synchronisation du réseau lumineux et la synchronisation a lieu à l'aide du premier axe de rayonnement libre, dont l'émetteur (7) émet un groupe d'impulsions avec une identification unique; ou
dans lequel les groupes d'impulsions utilisables pour la synchronisation sont appliqués successivement aux émetteurs (7) de différents axes de rayonnement par l'intermédiaire de l'unité d'émission (3), de sorte que l'axe de rayonnement utilisé pour la synchronisation varie dans le temps, la variation s'effectuant selon des modèles de temps qui peuvent être prédéterminés au choix par l'unité de commande d'émetteur (9).

8. Barrière lumineuse selon la revendication 7, **caractérisée en ce qu'**il est prévu, dans l'unité de réception (5), une unité de commande de récepteur (12) dans laquelle peut être effectuée une évaluation à sécurité intégrée des signaux de réception des récepteurs (10).

9. Barrière lumineuse selon la revendication 8, **caractérisée en ce que** l'unité de commande de récepteur (12) présente une structure redondante sous la forme de deux unités informatiques se surveillant mutuellement.

10. Barrière lumineuse selon l'une des revendications 8 ou 9, **caractérisée en ce qu'**un algorithme de synchronisation est mis en œuvre dans l'unité de commande de récepteur (12) est mis en œuvre.

11. Barrière lumineuse selon la revendication 10, **caractérisée en ce qu'**une synchronisation à sécurité intégrée peut être réalisée avec l'algorithme de synchronisation.
